# EUROPEAN PATENT APPLICATION

(11) **EP 2 007 136 A2**
(43) Date of publication of application: **24.12.2008**
(21) Application number: 08252108.9
(22) Date of filing: 19.06.2008
(51) Int. Cl.: H04N 5/232

(54) **Motion-image photography method and apparatus**

(30) Priority: 20.06.2007 JP 2007162739
(71) Applicant: FUJIFILM Corporation, Minato-ku Tokyo (JP)
(72) Inventor: Misawa, Atsushi , c/o Fujifilm Corporation, Miyagi (JP); Sato, Tsuneo , c/o Fujifilm Corporation, Miyagi (JP)
(74) Representative: Stevens, Jason Paul

(57) **Abstract**

A motion image for thumbnail display is automatically obtained during imaging. When image frames (FP) to be included in motion-image files are sequentially obtained by imaging. a first motion-image file (MF1) for thumbnail display is generated at first data rate (DR1) in a first set time period (T1). Then, a second motion-image file (MF2) is generated at second data rate (DR2), which is higher than the first data rate (DR1), in a second set time period (T2) after generation of the first motion-image file (MF1).

## Description

### BACKGROUND OF THE INVENTION

### Field of the Invention

The present invention relates to a motion-image photography method and apparatus for obtaining motion images (dynamic images, moving images or video images) by photography (imaging).

### Description of the Related Art

In recent years, it became possible to store a long motion image by use of a high-capacity information recording medium, such as an optical disk and a magnetic disk, as a recording medium for a digital camera. Meanwhile, a method for extracting, as a thumbnail image, one of the scenes of a recorded long motion image and for displaying the thumbnail image has been proposed. In this method, when the long motion image is recorded by using the high-capacity recording medium, the recorded scene can be easily identified (please refer to Japanese Unexamined Patent Publication No. 2003-23600, Japanese Unexamined Patent Publication No. 2006-121183 and Japanese Unexamined Patent Publication No. 2003-274368, for example).

In Japanese Unexamined Patent Publication No. 2003-23600, image data is extracted from a part of a series of motion images, the part having been obtained in a predetermined time period from the start of photography, and a thumbnail image is generated from the extracted image data. In Japanese Unexamined Patent Publication No. 2006-121183, a plurality of still images are obtained from a part of motion-image data within a range specified by a user. Then, a plurality of composite images are generated by combining reduced images of the obtained still images and a title-menu screen (a title menu) with each other. Then, a motion-image stream is produced from the generated plurality of composite images. In Japanese Unexamined Patent Publication No. 2003-274368, a thumbnail still-image is generated from each of a plurality of motion-image datasets. Then, when a user selects one of the thumbnail still-images, a thumbnail motion-image dataset corresponding to the selected thumbnail still-image is displayed.

Further, unlike the aforementioned techniques, in which thumbnail images are generated after obtainment of a motion image, an imaging apparatus that obtains a still image during obtainment of a motion image has been proposed (please refer to Japanese Unexamined Patent Publication No. 2005-311665, for example). In Japanese Unexamined Patent Publication No. 2005-311665, a plurality of pixels of an imaging device are divided into a group of pixels for obtaining motion images and a group of pixels for obtaining still images. If a shutter release button is pressed while a motion image is obtained by using the group of pixels for obtaining the motion images, a still image is obtained by using the group of pixels for obtaining the still images.

In Japanese Unexamined Patent Publication No. 2003-23600, Japanese Unexamined Patent Publication No. 2006-121183 and Japanese Unexamined Patent Publication No. 2003-274368, thumbnail images are obtained by an instruction or operation by a user after obtainment of a motion image by photography. In Japanese Unexamined Patent Publication No. 2005-311665, a thumbnail image is obtained by the operation of pressing the shutter release button by the user during photography. In other words, in all of Japanese Unexamined Patent Publication No. 2003-23600, Japanese Unexamined Patent Publication No. 2006-121183, Japanese Unexamined Patent Publication No. 2003-274368 and Japanese Unexamined Patent Publication No. 2005-311665, the thumbnail images are generated by the instructions from the user. Therefore, there is a problem that the user needs to perform the operation for generating the thumbnail images, which is additional work for the user.

### SUMMARY OF THE INVENTION

In view of the foregoing circumstances, it is an object of the present invention to provide a motion-image photography method and apparatus for automatically obtaining a motion image for thumbnail display during photography.

A motion-image photography method according to the present invention is a motion-image photography method, characterized in that when image frames to be included in motion-image files are sequentially obtained by photography, a first motion-image file for thumbnail display is generated by performing motion-image processing on a plurality of image frames that are obtained in a first set time period from the start of photography so that the data rate of the first motion-image file becomes a first data rate, and wherein a second motion-image file for viewing (browsing) is generated by performing motion-image processing on a plurality of image frames that are obtained in a second set time period after generation of the first motion-image file so that the data rate of the second motion-image file becomes a second data rate that is higher than the first data rate.

A motion-image photography apparatus according to the present invention is a motion-image photography apparatus, characterized by comprising:
an imaging means for sequentially obtaining, by photographing a subject, image frames to be included in motion-image files; and
a file generation unit for generating a first motion-image file for thumbnail display by performing motion-image processing on a plurality of image frames that are obtained in a first set time period from the start of photography so that the data rate of the first motion-image file becomes a first data rate and for generating a second motion-image file for viewing by performing motion-image processing on a plurality of image frames that are obtained in a second set time period after generation of the first motion-image file so that the data rate of the second motion-image file becomes a second data rate that is higher than the first data rate.

Here, the term "data rate" means a data amount per unit time. For example, the first data rate and the second data rate are determined by adjusting the compression ratio of an image frame, a frame rate, an image size, the number of gradation of brightness, the number of gradation of colors or the like.

It is desirable that the file generation unit alternately repeats generation of the first motion-image file and generation of the second motion-image file. The file generation unit may correlate a first motion-image file and a second motion-image file that has been generated immediately after generation of the first motion-image file with each other and store them.

Further, the motion-image photography apparatus may further include a file regeneration means for displaying, on a display unit, thumbnails of a plurality of first motion-image files in a regeneration state that have been generated by the file generation unit. Further, when a first motion-image file to be regenerated is selected from the plurality of first motion-image files, of which the thumbnails are displayed, the file regeneration means may regenerate a second motion-image file that has been obtained immediately after the selected first motion-image file. The file regeneration means should be able to regenerate the second motion-image file. The file regeneration means may continuously regenerate the first motion-image file and the second motion-image file instead of regenerating only the second motion-image file.

Further, the motion-image photography apparatus may further include a file conversion means for converting the first motion-image file into a motion-image file that has the second data rate. Further, when the file regeneration means regenerates the first motion-image file, as described above, the file regeneration means may regenerate the first motion-image file at the first data rate. Alternatively, the file regeneration means may convert the data rate of the first motion-image file to the second data rate and regenerate the first motion-image file at the second data rate after.

The motion-image photography apparatus may further include a file combination means for generating a combined motion-image file by combining the converted first motion-image file with a second motion-image file that has been correlated with the first motion-image file. Further, the file combination means may have a function for further combining a plurality of combined motion-image files.

According to the motion-image photography method and apparatus of the present invention, when image frames to be included in motion-image files are sequentially obtained by photography, a first motion-image file for thumbnail display is generated by performing motion-image processing on a plurality of image frames that are obtained in a first set time period from the start of photography so that the data rate of the first motion-image file becomes a first data rate. Further, a second motion-image file for viewing is generated by performing motion-image processing on a plurality of image frames that are obtained in a second set time period after generation of the first motion-image file so that the data rate of the second motion-image file becomes a second data rate that is higher than the first data rate. Therefore, it is possible to automatically generate the first motion-image file for thumbnail display during photography. Hence, a photographer does not need to perform an operation for generating a thumbnail motion-image after photography.

If generation of the first motion-image file and generation of the second motion-image file are alternately repeated from the start of photography till stoppage of the photography, a plurality of first motion-image files for thumbnail display are generated at constant time intervals when photography is performed for a long time period. Therefore, a user can easily retrieve a scene that he/she wants to see or watch.

Further, if the file generation unit has a function for correlating the first motion-image file and the second motion-image file that has been generated immediately after generation of the first motion-image file with each other, it is possible to manage files so that a second motion-image file to be regenerated can be easily found when the motion-image file is regenerated.

If the motion-image photography apparatus further includes a file regeneration means for displaying, on a display unit, thumbnails of a plurality of first motion-image files in a regeneration state that have been generated by the file generation unit, and if when a first motion-image file to be regenerated is selected from the plurality of first motion-image files, of which the thumbnails are displayed, the file regeneration means regenerates a second motion-image file that has been obtained immediately after the selected first motion-image file, it is possible to easily find the second motion-image file to be regenerated at the time of regenerating the motion-image file and to immediately regenerate the file.

Further, if the motion-image photography apparatus further includes a file conversion means for converting the first motion-image file that has the first data rate into a motion-image file that has the second data rate, it is possible to obtain high-quality images also in the obtainment period of the first motion-image file.

Further, if the motion-image photography apparatus further includes a file combination means for generating a combined motion-image file by combining the first motion-image file with a second motion-image file that has been obtained immediately after obtainment of the first motion-image file, it is possible to easily manage the files.

### BRIEF DESCRIPTION OF THE DRAWINGS

Figure 1A is a diagram illustrating an external view of a motion-image photography apparatus according to a preferred embodiment of the present invention;
Figure 1B is a diagram illustrating an external view of the motion-image photography apparatus according to the preferred embodiment of the present invention;
Figure 2 is a block diagram illustrating the motion-image photography apparatus according to the preferred embodiment of the present invention;
Figure 3 is a schematic diagram illustrating the data structure of first motion-image files and second motion-image files that are stored in a storage unit illustrated in Figure 2;
Figure 4 is a schematic diagram illustrating the data structure of first motion-image files and second motion-image files that are stored in a storage unit illustrated in Figure 2;
Figure 5 is a schematic diagram illustrating another embodiment of the storage unit illustrated in Figure 2;
Figure 6 is a flowchart showing a motion-image photography method according to a preferred embodiment of the present invention;
Figure 7 is a block diagram illustrating a motion-image photography apparatus according to a second embodiment of the present invention;
Figure 8 is a block diagram illustrating a motion-image photography apparatus according to a third embodiment of the present invention;
Figure 9 is a schematic diagram illustrating the state of a storage unit illustrated in Figure 8, in which a plurality of first motion-image files and a plurality of second motion-image files are stored;
Figure 10 is a schematic diagram illustrating a state, in which thumbnails of a plurality of first motion-image files are displayed on a display unit by a file regeneration means illustrated in Figure 8;
Figure 11A is a schematic diagram illustrating a state, in which a motion-image file to be regenerated by the file regeneration means illustrated in Figure 8 is selected;
Figure 11B is a schematic diagram illustrating a state, in which a motion-image file to be regenerated by the file regeneration means illustrated in Figure 8 is selected;
Figure 12 is a schematic diagram illustrating a state, in which a plurality of motion-image files to be regenerated by the file regeneration means illustrated in Figure 8 are selected;
Figure 13 is a flowchart showing an example of the operation of the file regeneration means illustrated in Figure 8;
Figure 14 is a block diagram illustrating a motion-image photography apparatus according to a fourth embodiment of the present invention;
Figure 15 is a schematic diagram illustrating a state, in which motion-image files to be combined by a file combination means illustrated in Figure 14 are selected;
Figure 16 is a schematic diagram illustrating the data structure of a first motion-image file and a second motion-image file before combination by the file combination means illustrated in Figure 14;
Figure 17 is a schematic diagram illustrating the data structure of the first motion-image file and the second motion-image file stored after being combined by the file combination means illustrated in Figure 14; and
Figure 18 is a schematic diagram illustrating a state, in which a plurality of motion-image files to be combined by the file combination means are selected.

### DESCRIPTION OF THE PREFERRED EMBODIMENTS

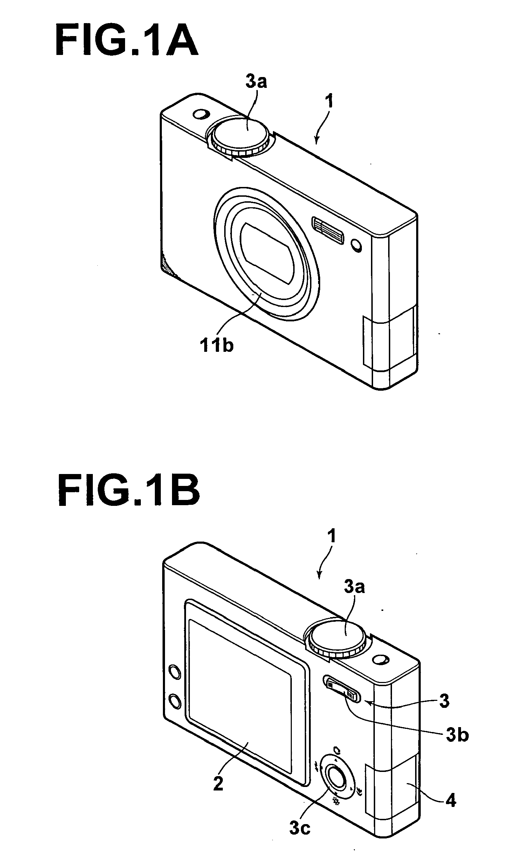

Hereinafter, preferred embodiments of a motion-image photography apparatus according to the present invention will be described in detail with reference to drawings. Figures 1A and 1B are perspective views of a motion-image photography apparatus according to a preferred embodiment of the present invention. A motion-image photography apparatus 1 is, for example, a digital camera that can obtain still images and motion images by photography. The motion-image photography apparatus 1 includes a display unit 2, a group 3 of operation buttons and the like. The display unit 2 is a liquid crystal display (LCD), for example. The display unit 2 displays motion images stored in a recording medium. Further, the display unit 2 displays motion images during photography.

The group 3 of operation buttons is used by a photographer to operate the motion-image photography apparatus 1. The group 3 of operation buttons includes a release button 3a, a mode selection lever 3b, an operation button 3c or the like, for example. The release button 3a is used to input an instruction for starting and stopping photography. The mode selection lever 3b is used to switch the operation mode of the apparatus to a still-image photography mode, a motion-image photography mode and a regeneration mode. The operation button 3c is used to select a menu or a motion-image file to be regenerated. When a still image needs to be obtained by photography, the mode selection lever 3b is set to the still-image photography mode and the release button 3a is fully pressed to instruct the apparatus to obtain one still image by photography. When a motion image needs to be photographed, the mode selection lever 3b is set to the motion-image photography mode to make the apparatus in a standby state for motion-image photography. Then, when the release button 3a is fully pressed once, obtainment of a motion image starts. When the release button 3a is fully pressed again, the obtainment of the motion image is stopped. Alternatively, the apparatus may operate in such a manner that photography is continued while the release button 3a is continued to be pressed and photography is stopped when the release button 3a is released.

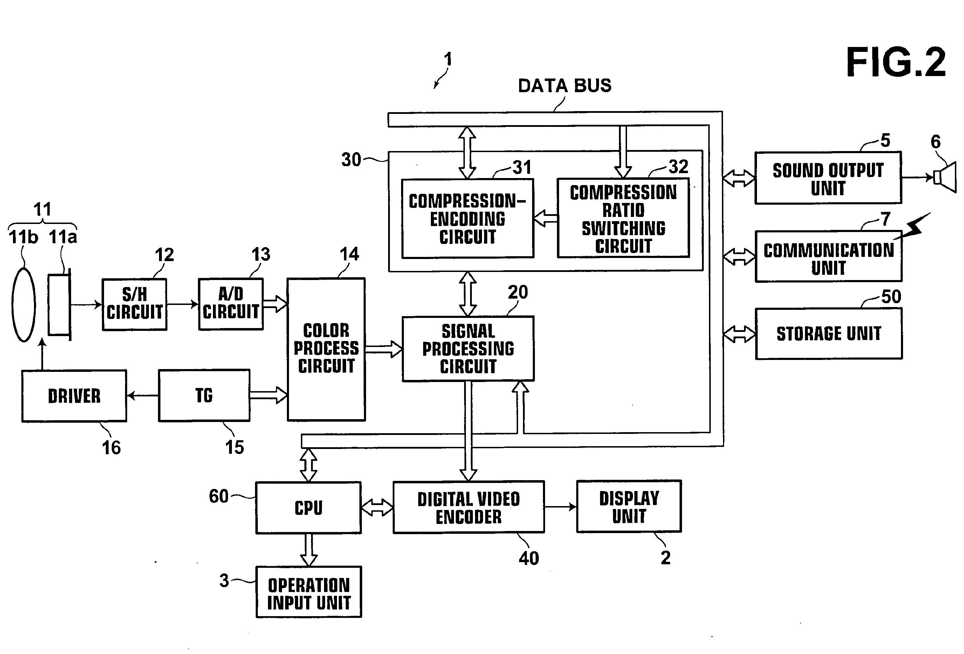

Figure 2 is a block diagram illustrating an example of the hardware configuration of the motion-image photography apparatus according to the present invention. In Figure 2, the motion-image photography apparatus 1 includes a sound output unit 5, a speaker 6, a communication unit 7 and the like. The sound output unit 5 and the speaker 6 output a shutter sound when the release button 3a is pressed, for example. Further, the sound output unit 5 and the speaker 6 provide a voice guide (guide by voice or sound) for operating the apparatus, for example. The communication unit 7 sends information, such as a motion image obtained by photography, to an external apparatus, such as a personal computer and a display device. Further, the communication unit 7 receives information from the outside of the motion-image photography apparatus 1. In Figure 2, a case in which the communication unit 3 performs data communication by wire is illustrated. Alternatively, other communication methods, such as radio communication (wireless communication) and optical communication, may be used, if necessary. Further, a communication protocol that is used in communicationmay be selected, if necessary.

Further, the motion-image photography apparatus 1 includes an imaging means 10, a signal processing circuit 20, a file generation unit 30 and the like. Each of the imaging means 10, the signal processing circuit 20 and the file generation unit 30 can transfer data through a data bus. The imaging means 10 sequentially obtains image frames FP to be included in a motion-image file by photographing a subject. The imaging means 10 includes an imaging device 11a, such as a CCD (charge coupled device) and a CMOS (complementary metal oxide semiconductor), and an imaging optical system 11b. The imaging optical system 11b images (forms or captures an image) of the subject on the imaging device 11a. The imaging device 11a sequentially reads out an image of the subject that has been formed on the light receiving surface of the imaging device 11a, as voltage signals (image signals) corresponding to signal charges. The imaging device 11a reads out the image based on a drive pulse that is provided by a timing generator 15 through a driver 16 according to an instruction from a CPU (central processing unit) 30. If the operation mode is set to the motion-image photography mode, image frames FP are sequentially obtained at a predetermined frame rate by using an interlace method or a progressive method.

Then, an S/H circuit 12 performs sampling and signal amplification on the image frames FP that have been obtained by imaging by the imaging means 10. The S/H circuit 12 includes a correlated double sampling circuit and the like. Further, A/D (analog to digital) conversion is performed by an A/D conversion circuit 13. Further, color process processing is performed by a color process circuit 14.

The signal processing circuit 20 performs signal processing on the image frames FP obtained by the imaging means 10. The signal processing circuit 20 performs image processing, such as processing for changing the image size, gradation processing, color conversion processing, density conversion processing, sharpness processing and white balance adjustment processing, for example.

The file generation unit 30 generates a motion-image file that has a predetermined data rate by performing motion-image processing on the image frames FP on which signal processing has been performed by the signal processing circuit 20. The file generation unit 30 includes a compression-encoding circuit 31 and a compression-ratio switching circuit 32.

The compression-encoding circuit 31 performs compression processing on the image frames FP that have been generated by the signal processing circuit 20. The compression-encoding circuit 31 compresses the image frames FP by using a well-known technique, such as mpeg and M-jpeg. Image frames FP on which compression-encoding processing has been performed are stored in a storage unit 50.

The compression ratio at the compression-encoding circuit 31 is determined by the compression-ratio switching circuit 32. The compression-ratio switching circuit 32 sets the compression ratio of the compression-encoding circuit 31 in first set time period T1 from the start of photography to a first compression ratio (first data rate DR1). Then, the compression-encoding circuit 31 generates a first motion-image file MF1 that has the first data rate DR1. Then, the compression-ratio switching circuit 32 sets the compression ratio of the compression-encoding circuit 31 in second set time period T2 (for example, 30 minutes to 1 hour) from the end of the first set time period (for example, 15 seconds) to a second compression ratio (second data rate DR2). The second compression ratio is lower than the first compression ratio. Then, the compression-encoding circuit 31 generates a second motion-image file MF2 that has the second data rate DR2. Further, the compression-ratio switching circuit 32 alternately repeats setting of the first compression ratio in the first set time period T1 and setting of the second compression ratio in the second set time period T2 from the start of photography to stoppage of the photography. Accordingly, generation of the first motion-image file MF1 and generation of the second motion-image file MF2 are alternately repeated.

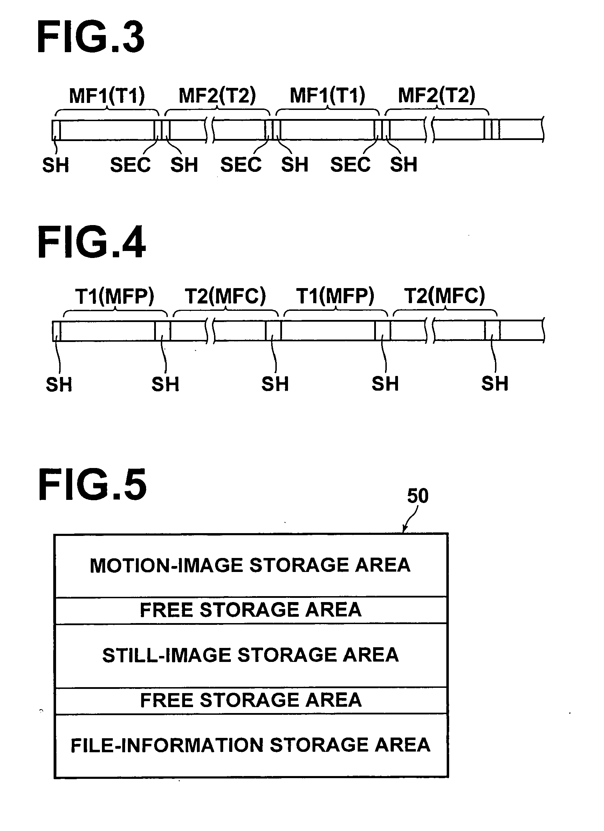

Specifically, as illustrated in Figure 3, the compression-encoding circuit 31 writes a sequence header SH for the first motion-image file. After then, the compression-encoding circuit 31 generates first image frames FP, on which compression-encoding has been performed so that the data rate becomes the first data rate DR1. Further, the compression-encoding circuit 31 writes the generated first image frames FP in the storage unit 50. Then, after the first set time period T1 has passed from the start of photography, the file generation unit 30 writes a sequence end code SEC and ends generation and storage of the first motion-image file MF1.

Then, the compression-encoding circuit 31 writes a sequence header SH for the second motion-image file MF2. Then, the compression-encoding circuit 31 generates second image frames FP, on which compression-encoding has been performed so that the data rate becomes the second data rate DR2. Further, the compression-encoding circuit 31 writes the generated second image frames FP in the storage unit 50. Then, after the second set time period T2 has passed from the end of the first set time period T1, the file generation unit 30 writes a sequence end code in the storage unit 50 and ends generation and storage of the second motion-image file MF2. Then, the aforementioned generation and storage of a first motion-image file MF1 is continuously performed. Accordingly, generation/storage of the first motion-image file MF1 and generation/storage of the second motion-image file MF2 are alternately repeated.

Specifically, the file generation unit 30 performs motion-image processing on a plurality of image frames FP that are obtained in the first set time period from the start of photography so that the data rate for the period becomes the first data rate DR1 and generates a first motion-image file MF1 for thumbnail display. Further, the file generation unit 30 performs motion-image processing on a plurality of image frames FP that are obtained in the second set time period after generation of the first motion-image file MF1 so that the data rate for the period becomes the second data rate DR2, which is higher than the first data rate DR1, and generates a second motion-image file MF2 for viewing. Further, the file generation unit 30 alternately repeats generation of the first motion-image file MF1 and generation of the second motion-image file MF2 from the start of photography to stoppage of the photography.

Further, the file generation unit 30 has a function for correlating a first motion-image file MF1 and a second motion-image file MF2 that has been obtained immediately after obtainment of the first motion-image file MF1 with each other. Specifically, as illustrated in Figure 4, when the compression-encoding circuit 31 finishes generation and storage of the second motion-image file MF2, the compression-encoding circuit 31 deletes the sequence end code of the first motion-image file MF1 that has beengenerated and stored immediately before the second motion-image file MF2. Then, the compression-encoding circuit 31 sets a new regeneration start point and a new regeneration end point of the first motion-image file MF1. Accordingly, the first motion-image file MF1 and the second motion-image file MF2 are correlated with each other and stored in the storage unit 50.

In the above description, a case of correlating files with each other by rewriting header information has been described, as illustrated in Figure 4. Alternatively, the first motion-image file MF1 and the second motion-image file MF2 may be stored as illustrated in Figure 3 and information for correlating them with each other may be separately stored. Specifically, as illustrated in Figure 5, the storage unit 50 may have a motion-image storage area, a still-image storage area, a free area and a file-information storage area. The first motion-image file MF1 and the second motion-image file MF2 that have the data structure as illustrate in Figure 3 may be stored in the motion-image storage area. Further, information for correlating the pair of the first motion-image file MF1 and the second motion-image file MF2 with each other may be stored in the file information storage area.

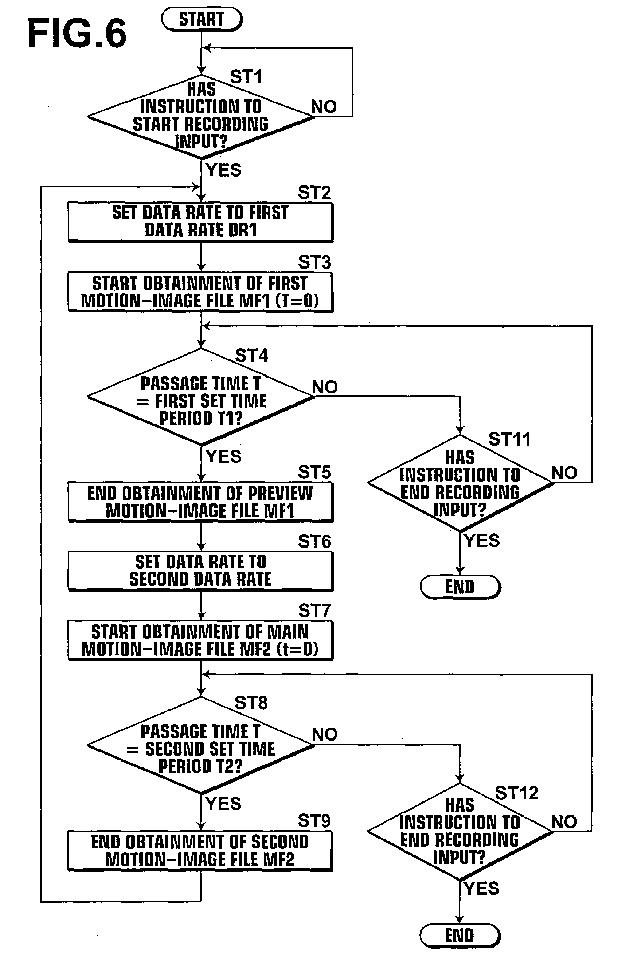

Figure 6 is a flowchart illustrating a motion-image photography method according to a preferred embodiment of the present invention. The motion-image photography method will be described with reference to Figures 1A through 6. First, an operation for starting recording of an image is performed, for example, by pressing the release button 3a while the mode selection level 3b is set to the motion-image recording mode or the like (step ST1). Then, the compression-ratio switching circuit 32 of the file generation unit 30 sets the compression ratio to a first compression ratio (step ST2). Then, the compression-encoding circuit 31 starts obtainment of the first motion-image file MF1 at the first data rate DR1 (step ST3). At this time, passage time T from the start of obtainment of the first motion-image file MF1 is set to 0 (T = 0).

Then, judgment is made as to whether the passage time T has reached the first set time period T1 (step ST4). When the passage time T has reached the first set time period T1, obtainment of the first motion-image file MF1 is ended (step ST5). If a photographer performs an operation for ending recording before the passage time reaches the first set time period T1 (step ST11), recording is ended and a first motion-image file MF1 is generated.

Then, the compression-ratio switching circuit 32 of the file generation unit 30 sets the compression ratio to a second compression ratio (step ST6) and obtainment of the second motion-image file MF2 at the second data rate DR2 is started (step ST7) . When the obtainment of the second motion-image file MF2 is started, the passage time T from the start of obtainment of the second motion-image file MF1 is set to 0 (T = 0).

Then, judgment is made as to whether the passage time T from the start of obtainment of the second motion-image file MF2 has reached the second set time period T2 (step ST8). If the passage time T has reached the second set time period T2, obtainment of the second motion-image file MF2 is ended (step ST9) . If the photographer performs an operation for ending recording before the passage time reaches the second set time period T2 (step ST12), recording is ended and a second motion-image file MF2 is generated. Further, when the second motion-image file MF2 has been generated, the first motion-image file MF1 and the second motion-image file MF2 are correlated with each other. Further, generation of the first motion-image file MF1 and generation of the second motion-image file MF2 are alternately repeated until the photographer inputs an instruction for ending recording (steps ST2 through ST9).

As described above, generation of the first motion-image file MF1 that has the first data rate DR1 and generation of the second motion-image file MF2 that has the second data rate DR2 are repeated. Therefore, it is possible to automatically generate the first motion-image file MF1 for thumbnail display during photography. Hence, the photographer does not need perform an operation for generating the first motion-image file MF1 after photography, which is additional work for the photographer. Specifically, in the conventional method, when a motion-image for thumbnail is generated, the user needs to generate a motion-image for menu after photography. Therefore, there was a problem that the operation by the user is complicated and troublesome for the user. In contrast, if the motion image for thumbnail is automatically generated during photography, as described above, the user does not need to perform an operation for generating a motion image for menu, thereby reducing the user's work.

Further, since the first motion-image file MF1 for thumbnail display is automatically generated in real time during photography, it is not necessary to perform the process of generating a motion image for thumbnail after recording a motion-image. Hence, it is possible to display the thumbnail immediately after photography.

Further, since generation of the first motion-image file MF1 and generation of the second motion-image file MF2 are repeated, even if the total recording time is long, the first motion-image files MF1 for thumbnail are generate at constant intervals. Therefore, the user can easily identify and regenerate a motion-image file that includes a scene that he/she remembers.

Further, it is possible to obtain the first motion-image file MF1 for thumbnail by using the same single system that is used to generate the second motion-image file MF2, and which includes the imaging device 11a, an output system, an image processing circuit, a recording circuit and the like. Therefore, unlike the conventional method, it is not necessary to separately provide an image processing circuit, a recording circuit and the like for generating the first motion-image file MF1. Hence, it is possible to prevent the hardware configuration of the motion-image photography apparatus 1 from becoming complex.

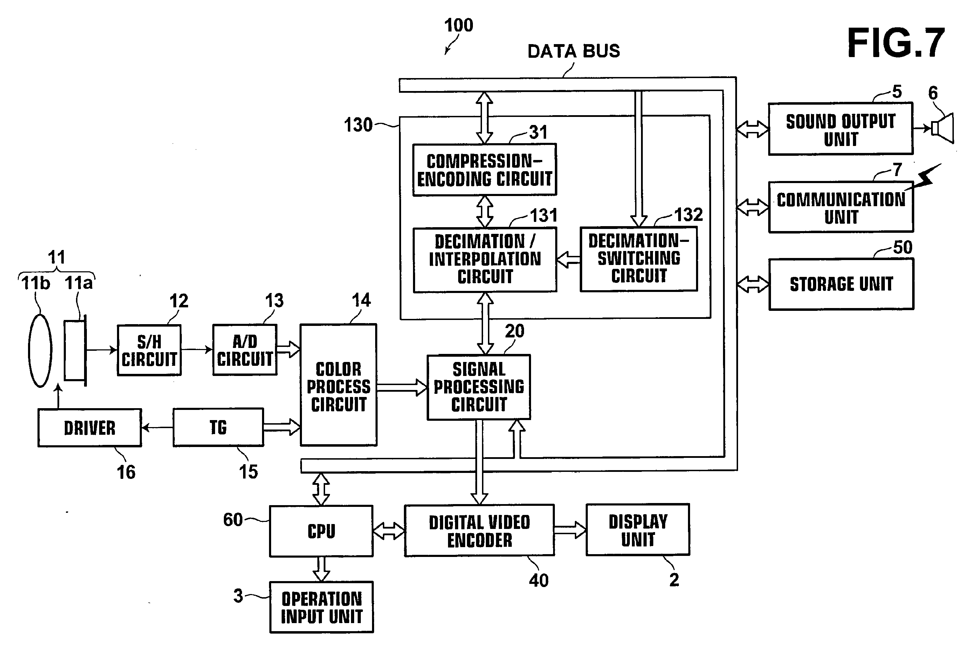

Figure 7 is a block diagram illustrating a motion-image photography apparatus according to a second embodiment of the present invention. With reference to Figure 7, the motion-image photography apparatus will be described. In a motion-image photography apparatus 100 illustrated in Figure 7, the same reference numerals as those used in the motion-image photography apparatus 1 illustrated in Figure 2 will be assigned to units that have the same configuration as those of the motion-image photography apparatus 1 and explanation thereof will be omitted. The motion-image photography apparatus 100, illustrated in Figure 7, differs from the motion-image photography apparatus 1, illustrated in Figure 2, in that the motion-image photography apparatus 100 adjusts the data rates by changing the resolutions of the motion images between the first motion-image file MF1 and the second motion-image file MF2.

Specifically, a file generation unit 130 includes a decimation circuit (thinning circuit) 131 and a decimation-switching circuit (thinning-switching circuit) 132. When the imaging means 10 has obtained image frames FP at a predetermined frame rate, the decimation circuit 131 changes the resolution of the motion image by reducing the number of image frames FP of the first frame rate in the first set time period T1 and generates a first motion-image file that has the first data rate DR1. Meanwhile, this process of switching the data rate by the decimation circuit 131 is controlled by the decimation-switching circuit 132. The decimation-switching circuit 132 thins the image frames FP so that the data rate in the first set time period T1 becomes the first data rate DR1. Further, the decimation-switching circuit 132 thins the image frames FP so that the data rate in the second set time period T2 becomes the second data rate DR2. When the decimation-switching circuit 132 sets the data rate to the second data rate DR2, the decimation-switching circuit 132 may generate a second motion-image file MF2 at the frame rate of the imaging device 11a without performing decimation (thinning).

Further, the file generation unit 130 includes the compression-encoding circuit 31, which is similar to the one illustrated in Figure 2. The compression-encoding circuit 31 has a function for performing compression-encoding on the image frames FP on which thinning has been performed by the decimation circuit 131.

When the motion-image photography apparatus is configured as described above, it is still possible to automatically generate the first motion-image file MF1 for thumbnail display during photography. Further, even if the total recording time is long, the user can easily identify and regenerate a motion-image file that includes a scene that he/she remembers. Particularly, as illustrated in Figures 4 and 5, if the first motion-image file MF1 and the second motion-image file MF2 are correlated and stored in the correlated manner, a file regeneration means 210 can efficiently find a second motion-image file that should be regenerated during regeneration of a motion-image file and immediately regenerate the file.

In the above description, as a method for switching the first data rate DR1 and the second data rate DR2, a case, in which the compression ratio (please refer to Figure 2) or the resolution of the motion image (please refer to Figure 7) is changed, has been described. Alternatively, the data rates may be switched by changing the image size by cutting away a portion of the image frame FP, by changing the number of gradation of brightness, by changing the number of gradation of colors and the like. Further, the frame rate of image frames FP that have been obtained by the imaging device 11a may be switched.

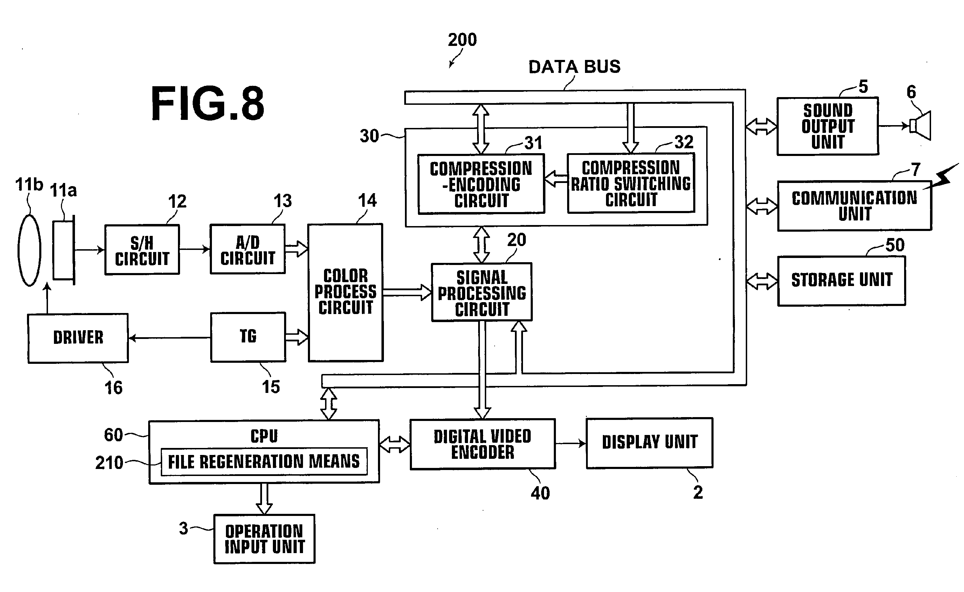

Figure 8 is a block diagram illustrating a motion-image photography apparatus according to a third embodiment of the present invention. A motion-image photography apparatus 200 will be described with reference to Figure 8. In the motion-image photography apparatus 200 illustrated in Figure 8, the same reference numerals as those used in the motion-image photography apparatus 1 illustrated in Figure 2 will be assigned to units that have the same configuration as those of the motion-image photography apparatus 1 and explanation thereof will be omitted. The motion-image photography apparatus 200, illustrated in Figure 8, differs from the motion-image photography apparatus 1, illustrated in Figure 2, in that the motion-image photography apparatus 200 includes a file regeneration means 210. The file regeneration means 210 regenerates each of motion-image files MF1 and MF2. The file regeneration means 210 is configured by causing a CPU to execute a program stored in a ROM (read-only memory) or the like that is mounted on the motion-image photography apparatus 200.

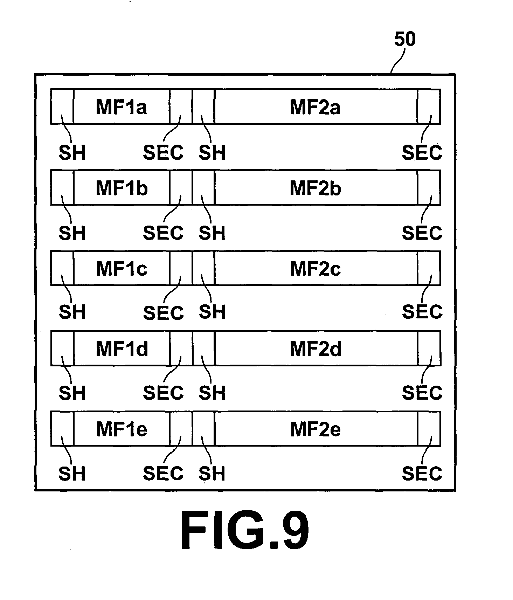

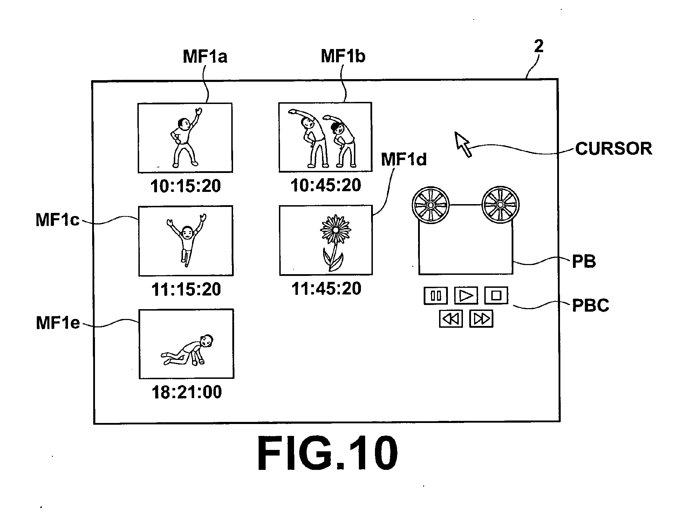

The file regeneration means 210 has a function for displaying, as thumbnails, a plurality of first motion-image files MF1 that have been generated by the file generation unit 30 at the display unit 2. Specifically, when a plurality of first motion-image files MF1a through MF1e and a plurality of second motion-image files MF2a through MF2e are stored in the storage unit 50, as illustrated in Figure 9, the file regeneration means 210 reads out information about each of the first motion-image files MF1 from the storage unit 50. Then, the file regeneration means 210 reads out the first motion-image files MF1. Further, as illustrated in Figure 10, the file regeneration means 210 displays the plurality of first motion-image files MF1 on a display screen of a display unit 2. The plurality of first motion-image files MF1 are displayed together as thumbnail images while the plurality of first motion-image files MF1 are regenerated.

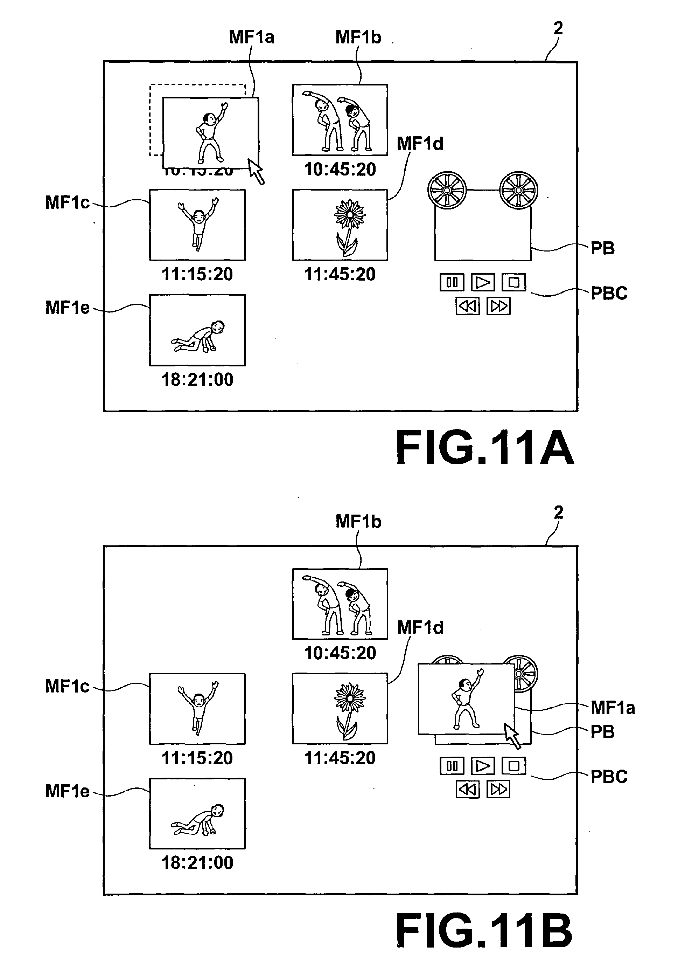

Then, as illustrated in Figure 11A, a first motion-image file MF1a is selected. Then, when the selected first motion-image file MF1a is moved to a regeneration box PB by drag-and-drop, as illustrated in Figure 11B, the file regeneration means 210 designates the second motion-image file MF2a that has been obtained immediately after obtainment of the first motion-image file MF1a (that is correlated with the first motion-image file MF1a) as a file to be regenerated. Then, when a regeneration button PBC is selected by an operation by the user, the file regeneration means 210 regenerates the retrieved second motion-image file MF2a at the display unit 2.

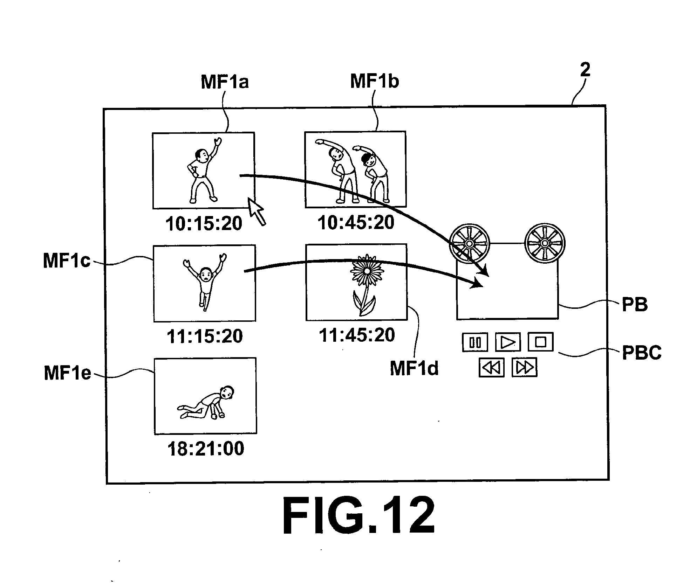

In Figures 11A and 11B, a case in which a single first motion-image file MF1 has been selected is used as an example. Alternatively, a plurality of first motion-image files, such as MF1a and MF1c, may be selected as illustrated in Figure 12. In this case, the file regeneration means 210 continuously regenerates second motion-image files MF2a and MF2c that are correlated with the selected first motion-image files MF1a and MF1c.

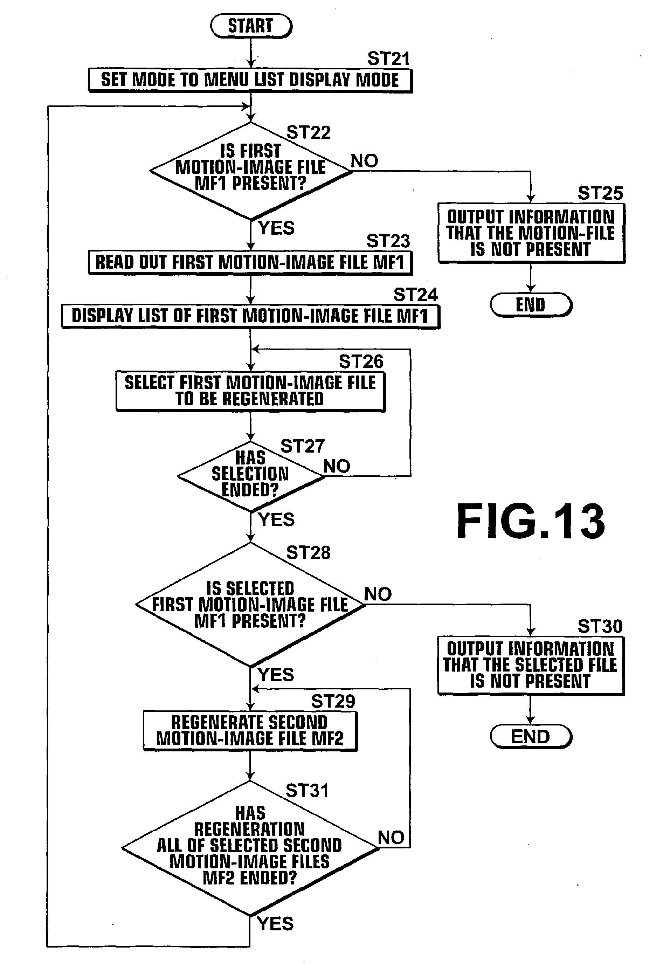

Figure 13 is a flowchart illustrating an example of the operation of the file regeneration means 210, illustrated in Figure 8. In Figure 13, when a photographer operates the mode selection lever 3b and sets the mode to a motion-image menu display mode (step ST21), the file regeneration means 210 reads out information about the first motion-image file MF1 stored in the storage unit 50 (step ST22). If the first motion-image file MF1 is present, the first motion-image file MF1 stored in the storage unit 50 is read out (step ST23). Then, a plurality of first motion-image files MF1 are displayed as thumbnail images (step ST24). At this time, each of the first motion-image files MF1 is displayed as a thumbnail image in a regeneration state. If no first motion-image file MF1 is present in the storage unit 50, information that no motion image is stored is displayed (step ST25).

After then, a first motion-image file MF1 to be regenerated is selected by the photographer by operating the operation button 3c (steps ST26 and ST27). Then, processing is performed to check whether a second motion-image file MF2 that is correlated with the selected first motion-image file MF1 is present or not (step ST28) . If the second motion-image file MF2 is present, the second motion-image file MF2 is displayed on the display unit 2 (step ST29). When a plurality of first motion-image files MF1 have been selected, a plurality of second motion-image files MF2 that are correlated with the plurality of first motion-image files MF1 are continuously regenerated. If a second motion-image file MF2 correlated with the first motion-image file MF1 is not present, information that the selected file is not present is displayed (step ST30). Then, when regeneration of all of second motion-image files MF2 that are correlated with the selected first motion-image files MF1 is finished, the display returns to a display of thumbnails of the first motion-image files MF1 (step ST31).

As described above, the photographer can select a first motion-image file MF1 that is close to a scene that he/she remembers while looking at the menu screen. Therefore, the photographer can easily find and regenerate a second motion-image file MF2 that he/she wants to watch. Further, since the motion image has been automatically divided into scenes that have appropriate lengths of time, it is possible to easily retrieve a scene. Further, the operatability (handling efficiency) of the photography apparatus can be improved.

In Figures 8 through 13, a case, in which when the first motion-image file MF1 has been selected, only the second motion-file MF2 is regenerated without regenerating the first motion-image file MF1, has been described as an example. Alternatively, the first motion-image file MF1 and the second motion-image file MF2 may be continuously regenerated.

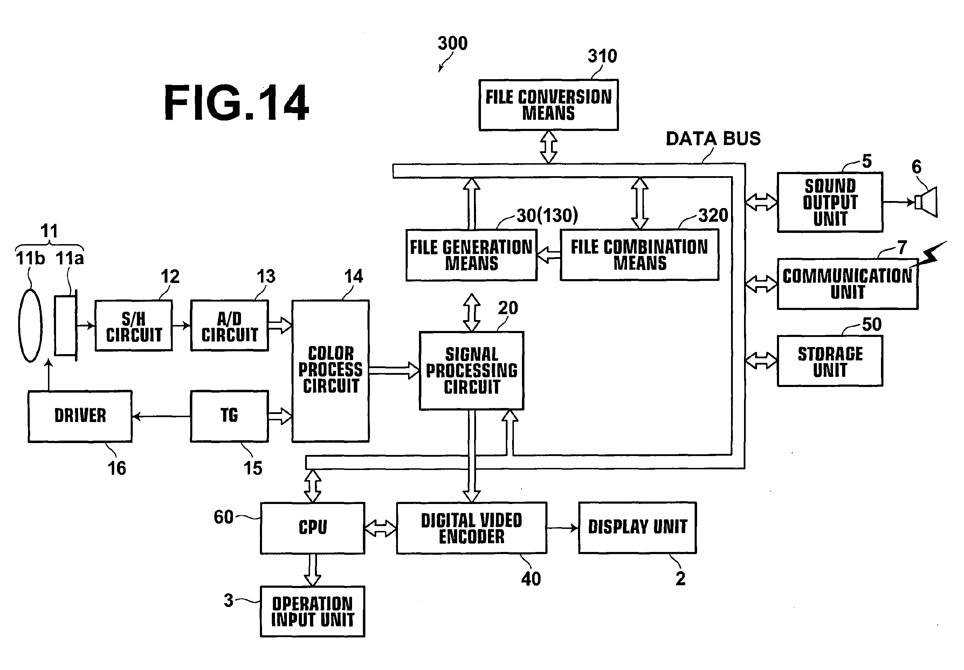

Figure 14 is a block diagram illustrating a motion-image photography apparatus according to a fourth embodiment of the present invention. The motion-image photography apparatus will be described with reference to Figure 14. In a motion-image photography apparatus 300 illustrated in Figure 14, the same reference numerals as those used in the motion-image photography apparatus 200 illustrated in Figure 8 will be assigned to units that have the same configuration as those of the motion-image photography apparatus 200 and explanation thereof will be omitted. The motion-image photography apparatus 300, illustrated in Figure 14, differs from the motion-image photography apparatus 200, illustrated in Figure 8, in that the motion-image photography apparatus 300 includes a file conversion means 310 and a file combination means 320. The file conversion means 310 may be installed in the compression-encoding circuit 31 or the decimation circuit 131. Alternatively, the file conversion means 310 may be configured by causing a CPU to execute a program stored in a ROM or the like that is mounted on the motion-image photography apparatus 300. Further, the file combination means 320 is configured by causing the CPU to execute a program stored in a ROM or the like that is mounted on the motion-image photography apparatus 300.

The file conversion means 310 converts the first motion-image file MF1 that has the first data rate DR1 to a motion-image file that has the second data rate DR2. For example, when a first motion-image file MF1 at the first compression ratio has been generated by performing compression-encoding at a first compression ratio (please refer to Figure 2), the file conversion means 310 converts the first motion-image file MF1 to a motion-image file at a second compression ratio by using a well-known technique, thereby changing the data rate from the first data rate DR1 to the second data rate DR2.

Alternatively, when the image frames FP have been thinned and the first motion-image file MF1 at the first data rate DR1 has been generated (please refer to Figure 8), the file conversion means 310 interpolates an image frame FP between two consecutive image frames FP by using the two consecutive frames FP. Accordingly, the file conversion means 310 converts the data rate of the first motion-image file MF1 from the first data rate DR1 to the second data rate DR2.

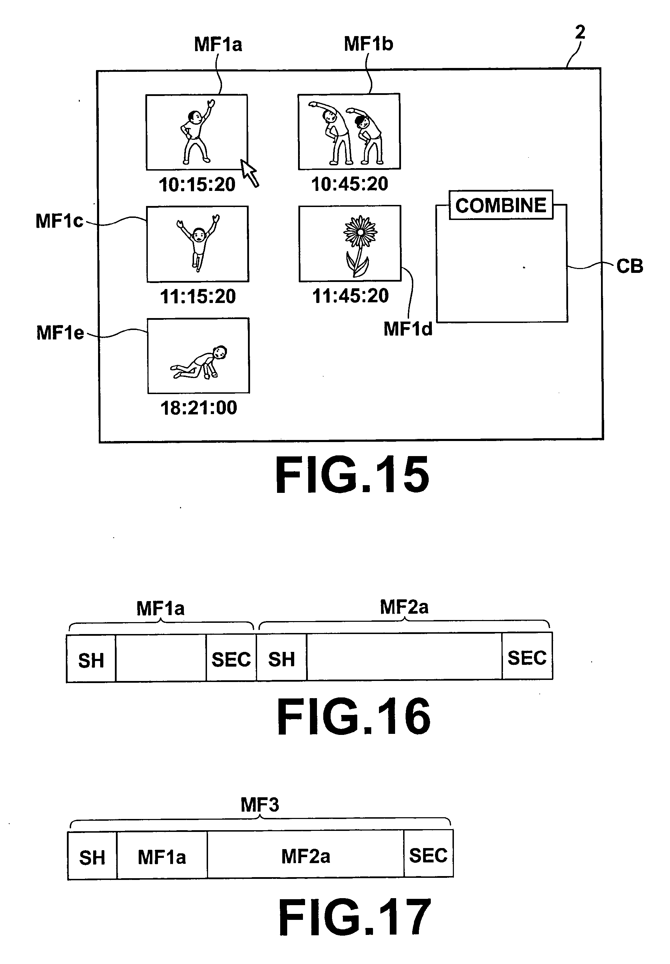

The file combination means 320 combines the first motion-image file MF1 after upconversion and the second motion-image file MF2. Specifically, the mode is set to a file combination mode by an operation of the mode selection lever 3b by the user. Then, as illustrated in Figure 15, the file regeneration means 210 displays, as thumbnail images, the first motion-image files MF1a through MF1e that are stored in the storage unit 50.

As illustrated in Figure 16, the first motion-image file MF1 and the second motion-image file MF2 are divided from each other by a sequence header and the like before the files are combined (please refer to Figures 4 and 5) . At this time, the file combination means 320 deletes a sequence end code SEC of the first motion-image file MF1 and a sequence header SH of the second motion-image file MF2. Further, the file combination means 320 records a new sequence header SH in the header area of the first motion-image file MF1 and a new sequence end code SEC.

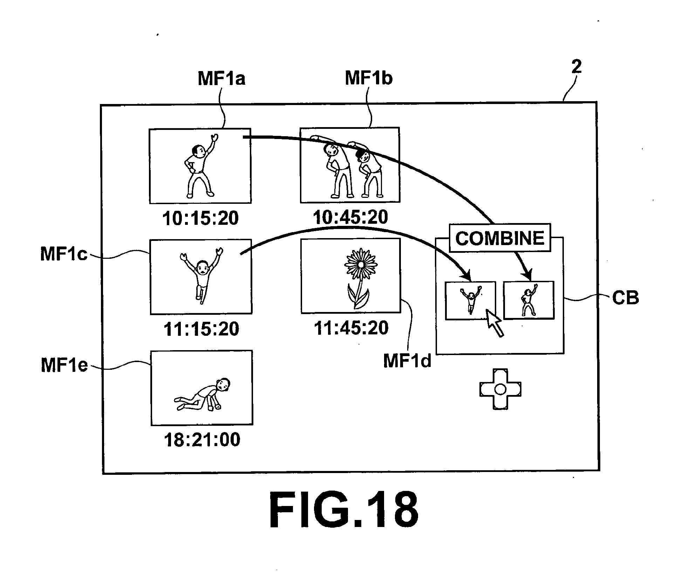

Further, the file combination means 320 has a function for combining combined motion-image files MF3 together in addition to the function for combining the first motion-image file MF1 and the second motion-image file MF2 with each other, as described above. For example, as illustrated in Figure 18, when a user has selected the first motion-image files Mf1a and Mf1c, which he/she wants to combine with each other, by drag-and-drop, the file conversion means 310 upconverts the first motion-image file MF1a. Further, the file combination means 320 combines the first motion-image file MF1a and the second motion-image file MF2a and generates a combined motion-image file MF3a. Similarly, the file conversion means 310 upconverts the first motion image file MF1c. Further, the file combination means 320 combines the first motion-image file MF1c and the second motion-image file MF2c and generates a combined motion-image fileMF3c. Then, the file combination means 320 combines the combined motion-image files MF3a and MF3c with each other. As described, the user can select arbitrary motion-image files and combine the selected motion-image files. Therefore, it is possible to easily edit the motion images as intended by the user.

When the file regeneration means 210 regenerates the first motion-image file MF1 without combining the first motion-image file MF1 and the second motion-image file MF2 (please refer to Figures 8 through 13), the first motion-image MF1 may be displayed at the display unit 2 after upconversion. Accordingly, it is possible to provide a motion image that has high quality even for a scene that has been obtained during recording of the first motion-image file MF1.

When image frames FP to be included in motion-image files are sequentially obtaining by photography, a first motion-image file MF1 for thumbnail display is generated by performing motion-image processing on a plurality of image frames FP that are obtained in a first set time period T1 from the start of photography so that the data rate of the first motion-image file MF1 becomes a first data rate DR1. Then, a second motion-image file MF2 for viewing is generated by performing motion-image processing on a plurality of image frames FP that are obtained in a second set time period T2 after generation of the first motion-image file MF2 so that the data rate of the second motion-image file MF2 becomes a second data rate DR2 that is higher than the first data rate DR1. Accordingly, it is possible to automatically generate the first motion-image file MF1 for thumbnail display during photography. Therefore, the photographer does not need to perform an operation for generating a thumbnail image after photography.

Further, if generation of the first motion-image file MF1 and generation of the second motion-image file MF2 are alternately repeated from the start of photography till stoppage of the photography, when the total photography time is long, a plurality of first motion-image files MF1 for thumbnail display are generated at constant intervals. Therefore, the user can easily retrieve a scene that he/she wants to watch.

Further, if the file generation unit 30 has a function for correlating the first motion-image file MF1 and the second motion-image file MF2 that has been obtained immediately after obtainment of the first motion-image file MF1, it is possible to efficiently retrieve the second motion-image file to be regenerated at the time of regeneration of the motion-image file and to regenerate the motion-image file immediately.

Further, as illustrated in Figure 8, the apparatus may further include the file regeneration means 210 for displaying, as thumbnail images, a plurality of first motion-image files MF1 generated by the file generation unit 30 in a regeneration state. Further, when a first motion-image file MF1 to be regenerated has been selected from a plurality of first motion-image files MF1 that are displayed as thumbnail images, the file generation unit 30 may regenerate a second motion-image file MF2 that has been obtained immediately after obtainment of the selected first motion-image file MF1. If the apparatus is configured as described above, it is possible to easily retrieve a scene that he/she wants to watch when an image is regenerated.

Further, as illustrated in Figure 14, if the apparatus further includes the file conversion means 310 for converting the data rate of the first motion-image file MF1 from the first data rate to the second data rate, it is possible to obtain high-quality motion images for the obtainment period of the first motion-image file MF1.

Further, if the apparatus further includes the file combination means 320 for generating a combined motion-image file by combining the first motion-image file MF1 and the second motion-image file MF2 that has been obtained immediately after obtainment of the first motion-image file MF1, it is possible to easily manage files.

## Claims

1. A motion-image photography method, **characterized in that** when image frames to be included in motion-image files are sequentially obtained by photography, a first motion-image file (MF1) for thumbnail display is generated by performing motion-image processing on a plurality of image frames that are obtained in a first set time period (T1) from the start of photography so that the data rate of the first motion-image file (MF1) becomes a first data rate (DR1), and wherein a second motion-image file (MF2) for viewing is generated by performing motion-image processing on a plurality of image frames that are obtained in a second set time period (T2) after generation of the first motion-image file (MF1) so that the data rate of the second motion-image file (MF2) becomes a second data rate (DR2) that is higher than the first data rate (DR1).

2. A motion-image photography method, as defined in Claim 1, **characterized in that** generation of the first motion-image file (MF1) and generation of the second motion-image file (MF2) are alternately repeated from the start of photography till stoppage of the photography.

3. A motion-image photography apparatus, **characterized by** comprising:
an imaging means (10) for sequentially obtaining, by photographing a subject, image frames to be included in motion-image files; and
a file generation unit (30) for generating a first motion-image file (MF1) for thumbnail display by performing motion-image processing on a plurality of image frames that are obtained in a first set time period (T1) from the start of photography so that the data rate of the first motion-image file (MF1) becomes a first data rate (DR1) and for generating a second motion-image file (MF2) for viewing by performing motion-image processing on a plurality of image frames that are obtained in a second set time period (T2) after generation of the first motion-image file (MF1) so that the data rate of the second motion-image file (MF2) becomes a second data rate (DR2) that is higher than the first data rate (DR1).

4. A motion-image photography apparatus, as defined in Claim 3, **characterized in that** the file generation unit (30) alternately repeats generation of the first motion-image file (MF1) and generation of the second motion-image file (MF2) from the start of photography till stoppage of the photography

5. A motion-image photography apparatus, as defined in Claim 3 or 4, **characterized in that** the file generation unit (30) has a function for correlating the first motion-image file (MF1) and the second motion-image file (MF2) that has been generated immediately after generation of the first motion-image file (MF1) with each other.

6. A motion-image photography apparatus, as defined in any one of Claims 3 to 5, **characterized by** further comprising:
a file regeneration means (210) for displaying, on a display unit, thumbnails of a plurality of first motion-image files (MF1) in a regeneration state that have been generated by the file generation unit (30), wherein when a first motion-image file (MF1) to be regenerated is selected from the plurality of first motion-image files (MF1), of which the thumbnails are displayed, the file regeneration means (210) regenerates a second motion-image file (MF2) that has been obtained immediately after the selected first motion-image file (MF1).

7. A motion-image photography apparatus, as defined in any one of Claims 3 to 6, **characterized by** further comprising:
a file conversion means (310) for converting the first motion-image file (MF1) into a motion-image file that has the second data rate (DR2).

8. A motion-image photography apparatus, as defined in Claim 7, **characterized by** further comprising:
a file combination means (320) for generating a combined motion-image file (MF3) by combining the first motion-image file (MF1) converted by the file conversion means (310) with a second motion-image file (MF2) that has been obtained immediately after obtainment of the first motion-image file (MF1).

9. A motion-image photography apparatus, as defined in any one of Claims 3 to 8, **characterized in that** the file generation unit (30) includes a compression-encoding unit (31) for compression-encoding the plurality of image frames, and wherein the compression-encoding unit (31) compression-encodes each of the image frames at a first compression ratio in the first set time period (T1) so that the data rate for the first set time period (T1) becomes the first data rate (DR1) and at a second compression ratio in the second set time period (T2) so that the data rate for the second set time period (T2) becomes the second data rate (DR2).
